Europäisches Patentamt

European Patent Office

Office européen des brevets

(11) Numéro de publication : **0 664 271 A1**

(12) **DEMANDE DE BREVET EUROPEEN**

(21) Numéro de dépôt : **95400108.7**

(22) Date de dépôt : **19.01.95**

(51) Int. Cl.⁶ : **B66C 15/04**

(30) Priorité : **24.01.94 FR 9400820**

(43) Date de publication de la demande :
**26.07.95 Bulletin 95/30**

(84) Etats contractants désignés :
**AT BE CH DE DK ES FR GB GR IT LI LU NL PT SE**

(71) Demandeur : **SOLLAC S.A.**
**Immeuble Elysées-la-Défense,**
**29, Le Parvis la Défense**
**F-92800 PUTEAUX (FR)**

(72) Inventeur : **Lesage, Michel**
**29, rue de la Gare**
**F-57330 Zoufftgen (FR)**

(74) Mandataire : **Cabinet Martinet & Lapoux**
**BP 405**
**F-78055 Saint Quentin en Yvelines Cédex (FR)**

(54) **Dispositif et procédé d'anticollision pour mobiles sur un chemin de déplacement commun.**

(57) Pour empêcher une collision entre des premier et second mobiles, tels que ponts roulants, déplaçables sur un chemin de déplacement, un procédé mis en oeuvre dans le premier mobile comprend une mesure (E1) d'une première distance ($X_n$) entre le premier mobile et une origine dans un référentiel fixe et une seconde distance ($DR_{n,n+1}$) entre les premier et second mobiles. Le procédé comprend les étapes de déterminer (E3) une première vitesse ($V_n$) du premier mobile dans le référentiel et une seconde vitesse ($VR_{n,n+1}$) du premier mobile relativement au second mobile pour déduire une troisième vitesse ($V_{n+1}$) du second mobile dans le référentiel, puis d'estimer (E5) une marge de sécurité ($MS_{n,n+1}$) entre les premier et second mobiles, puis de comparer (E6) ladite marge ($MS_{n,n+1}$) à un seuil afin de produire un facteur de risque de collision ($R_{n,n+1}$), et enfin de décider (E7) une action (E8) sur des moyens moteurs du premier mobile en fonction du signe des première, seconde et troisième vitesses ($V_n$, $VR_{n,n+1}$, $V_{n+1}$) et du facteur de risque ($R_{n,n+1}$).

*FIG.4*

| | |
|---|---|
| E1 | Aquisition Mesures $X_n$  $DR_{n-1,n}$  $DR_{n,n+1}$ |
| E2 (Fig.5) | Cohérence mesures |
| E3 | Vitesses $V_n$  $VR_{n-1,n}$  $VR_{n,n+1}$ |
| E4 (Fig.5) | Cohérence vitesses |
| E5 (Fig.6) | Marges de sécurité $MS_{n-1,n}$  $MS_{n,n+1}$ |
| E6 (Fig.7) | Détection de risque $R_{n-1,n}$  $R_{n,n+1}$ |
| E7 (Fig.8) | Décision |
| E8 | Action |

Contrôle Action  E9

Jouve, 18, rue Saint-Denis, 75001 PARIS

La présente invention a trait à un procédé d'anticollision de mobiles motorisés, tels que ponts roulants, déplaçables de manière autonome les uns par rapport aux autres sur un même chemin de déplacement. La présente invention concerne également un dispositif d'anticollision pour mettre en oeuvre le procédé.

Dans la technique antérieure, des ponts roulants en déplacement sur un même chemin de déplacement sont classiquement protégés par des moyens électriques de fin de course qui limitent la course des ponts roulants à chaque extrémité du chemin de déplacement, et par des moyens mécaniques de fin de course, tels que butoirs d'extrémités, utiles en cas de défaillance des moyens électriques. En outre, un système d'anticollision incluant un détecteur de proximité équipe les ponts roulants de manière à imposer une distance minimale d'approche entre deux ponts. Ce type de système d'anticollision n'estime que la distance relative entre deux ponts et non leur vitesse relative, ce qui entraîne en pratique des alarmes ou des arrêts intempestifs des ponts, par exemple lorsque deux ponts sont proches l'un de l'autre et ont des déplacements suivant un même sens avec des vitesses sensiblement égales, ou lorsque l'un des ponts se rapproche lentement de l'autre.

La présente invention vise à remédier aux inconvénients de la technique antérieure, en fournissant un dispositif et un procédé d'anticollision pour un mobile, tel que pont roulant, qui évaluent non seulement le déplacement du mobile par rapport à un référentiel fixe, mais également le déplacement relatif du mobile par rapport à un mobile adjacent directement en regard sur le chemin de déplacement.

A cette fin, un procédé d'anticollision entre des premier et second mobiles déplaçables sur un chemin de roulement commun est mis en oeuvre dans ledit premier mobile et comprend une mesure d'une première distance entre le premier mobile et une origine dans un référentiel fixe prédéterminé et d'une seconde distance entre le premier mobile et le second mobile. Le procédé est caractérisé en ce qu'il comprend les étapes de :

- déterminer une première vitesse du premier mobile dans ledit référentiel fixe et une seconde vitesse du premier mobile relativement au second mobile en fonction des première et seconde distances afin d'en déduire une troisième vitesse du second mobile dans ledit référentiel fixe,
- estimer une première marge de sécurité entre les premier et second mobiles en fonction de la seconde distance et des première et troisième vitesses,
- comparer ladite première marge de sécurité à au moins un premier seuil prédéterminé afin de produire un premier facteur de risque de collision, et

- décider une action sur des moyens moteurs du premier mobile en fonction du signe d'au moins l'une des première, seconde et troisième vitesses et en fonction du premier facteur de risque de collision afin d'empêcher une collision entre les premier et second mobiles.

Avantageusement, l'étape d'estimer prend en considération des décélérations des mobiles dont les variations ont été établies après des essais de ralentissement des mobiles. Selon l'invention, l'étape d'estimer comprend les sous-étapes de calcul d'une première distance d'arrêt du premier mobile en fonction de la première vitesse et d'une décélération prédéterminée du premier mobile, et d'une seconde distance d'arrêt du second mobile en fonction de la troisième vitesse et d'une décélération prédéterminée du second mobile, et de calcul de ladite première marge de sécurité en fonction de la seconde distance et des première et seconde distances d'arrêt.

Afin de remédier à toute erreur de mesure ou de détermination de variable nécessaire à la prise de décision, le procédé comprend de préférence une étape de contrôle de cohérence relative à une variable égale à l'une des première et seconde distances et première et seconde vitesses. L'étape de cohérence comporte les sous-étapes de :

- effectuer au moins l'une de première et seconde comparaisons, la première comparaison consistant à comparer la variable en valeur absolue à une valeur maximale, et la seconde comparaison consistant à comparer une différence entre la variable et une valeur de la variable à un instant précédent avec des différences minimale et maximale,
- lorsque la variable en valeur absolue est inférieure à la valeur maximale et ladite différence est comprise entre les différences minimale et maximale, incrémenter un compte de cohérence de un et considérer ladite variable comme cohérente dans les étapes suivantes du procédé, un compte de défaut étant mis à zéro lorsque le compte de cohérence est supérieur à un compte de cohérence minimal,
- lorsque la variable en valeur absolue est supérieure à la valeur maximale ou ladite différence est inférieure à la différence minimale ou supérieure à la différence maximale, incrémenter ledit compte de défaut de un et de mettre à zéro le compte de cohérence, comparer le compte de défaut à un compte de défaut maximal afin d'acquérir à nouveau ladite variable lorsque le compte de défaut est inférieur au compte de défaut maximal, et actionner les moyens moteurs lorsque le compte de défaut est supérieur au compte de défaut maximal.

L'invention s'applique également lorsque le second mobile est remplacé par un obstacle fixe à l'une des extrémités du chemin de roulement.

L'invention s'applique également lorsque le premier mobile est situé entre le second mobile et un troisième mobile qui est déplaçable sur le chemin de roulement à l'opposé du second mobile par rapport au premier mobile. Le procédé comprend alors des étapes de mesurer une troisième distance entre les premier et troisième mobiles, de déterminer une quatrième vitesse du premier mobile relativement au troisième mobile en fonction des première et troisième distances afin d'en déduire une cinquième vitesse du troisième mobile dans ledit référentiel fixe, d'estimer une seconde marge de sécurité entre les premier et troisième mobiles en fonction de la troisième distance et des première et cinquième vitesses, et de comparer ladite seconde marge de sécurité à au moins un second seuil prédéterminé afin de produire un second facteur de risque de collision. L'étape de décider est également dépendante des quatrième et cinquième vitesses et du second facteur de risque de collision.

L'invention concerne également un dispositif d'anticollision qui comprend relativement au premier mobile :

- un premier moyen de mesure de distance pour mesurer une première distance entre le premier mobile et une origine dans un référentiel fixe prédéterminé,
- un second moyen de mesure de distance pour mesurer au moins une seconde distance du mobile entre les premier et second mobiles, et
- un moyen central de traitement relié aux premier et second moyens de mesure de distance et à des moyens moteurs du premier mobile pour mettre en oeuvre le procédé.

Le premier moyen de mesure de distance comprend de préférence un distancemètre à laser fixé au premier mobile et un réflecteur fixe dans le référentiel, en regard du distancemètre.

Le second moyen de mesure de distance comprend de préférence un distancemètre à laser fixé au premier mobile et un réflecteur fixé sur le second mobile, en regard du distancemètre.

Les procédé et dispositif anticollision selon l'invention sont particulièrement avantageux pour une installation comprenant au moins deux mobiles déplaçables sur le même chemin de roulement. Cependant, ils sont utilisables également dans le cas où l'installation comprend un seul mobile, par exemple pour éviter des collisions avec des obstacles pouvant se trouver sur la voie de circulation du mobile.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est une vue en perspective d'une installation de ponts roulants ;
- la figure 2 est une vue de dessus d'une installation de ponts roulants équipés de dispositifs d'anticollision selon l'invention ;
- la figure 3 est un bloc-diagramme schématique d'un dispositif d'anticollision selon l'invention ;
- la figure 4 est un algorithme d'anticollision selon l'invention ;
- la figure 5 est un algorithme de contrôle de cohérence selon l'invention ;
- la figure 6 est un algorithme de calcul de distance de sécurité selon l'invention ;
- la figure 7 est un algorithme d'évaluation de risque de collision selon l'invention ; et
- la figure 8 est un algorithme de décision selon l'invention.

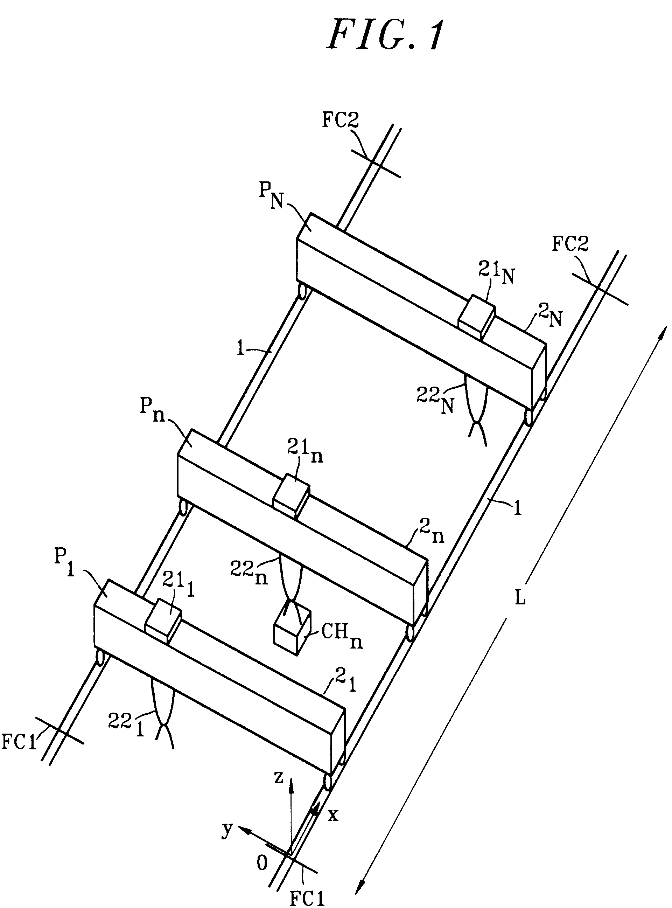

En référence à la figure 1, une **installation de ponts roulants** pour le déplacement et le transport de charges comprend N ponts roulants $P_1$ à $P_N$ déplaçables sur un même chemin de roulement, N étant un entier valant typiquement 2, 3 ou 4. A titre d'exemple, la réalisation illustrée comprend N = 3 ponts roulants. Les ponts roulants sont des ponts posés qui circulent sur des rails de roulement parallèles 1. Les rails de roulement matérialisent le chemin de déplacement des ponts roulants qui est classiquement limité à ses deux extrémités par des moyens électriques de fin de course FC1 et FC2 et des moyens mécaniques de fin de course (non représentés). Un pont roulant $P_n$, avec $1 \leqq n \leqq N$, comprend au moins une poutre $2_n$ munie à chacune de ses extrémités d'un sommier roulant et guidée par l'intermédiaire de galets menés ou fous et de galets moteurs pour contact et guidage sur les rails de roulement 1. Les galets moteurs sont entraînés par des moteurs électriques $MO_n$ de préférence selon une vitesse variable régulée électroniquement, ou en variante par des moteurs asynchrones selon au moins deux vitesses. Un chariot $21_n$ est déplaçable longitudinalement à la poutre $2_n$ et porte un palan de levage de charge $22_n$. Le chariot est motorisé et le palan est un palan électrique à câble ou à chaîne ou est un palan pneumatique.

En variante, le pont roulant $P_n$ est un pont suspendu, ou un portique se déplaçant sur deux rails fixés au sol, ou encore un semi-portique se déplaçant d'un côté sur un rail posé au sol et de l'autre côté sur un rail aérien.

Dans tous les cas, le pont roulant $P_n$ déplace une charge $CH_n$ selon des combinaisons de trois déplacements :

- un déplacement vertical, dit déplacement de levage,
- un déplacement longitudinal au pont roulant, c'est-à-dire transversal aux rails de roulement, dit déplacement de direction, et
- un déplacement longitudinal aux rails de roulement, dit déplacement de translation.

Le déplacement de la charge $CH_n$ est commandé par un opérateur, dit pontier, qui utilise un tableau de commande qui est soit un boîtier lié par un câble au pont, soit un panneau placé dans une cabine, fixe ou installée sur le pont. L'opérateur commande des moteurs d'entraînement du palan $22_n$, du chariot $21_n$ et de la poutre $2_n$ de manière à déplacer la charge $CH_n$ selon un trajet souhaité.

Les ponts roulants de l'installation ne sont pas nécessairement identiques entre eux et peuvent être différents par leurs structures mécaniques ou par leurs moyens d'entraînement et de commande.

Dans la suite, seul le déplacement de translation est pris en considération, c'est-à-dire le déplacement des ponts roulants sur le chemin de roulement. Le premier pont roulant $P_1$ se déplace entre le pont roulant $P_2$ et la première extrémité du chemin de roulement définie par le premier moyen de fin de course électrique FC1 ; le dernier pont roulant $P_N$ se déplace entre le pont roulant $P_{N-1}$ et la seconde extrémité du chemin de roulement définie par le second moyen de fin de course électrique FC2 ; si N est au moins égal à 3, le pont $P_n$, avec $1 < n < N$, se déplace entre les deux ponts adjacents $P_{n-1}$ et $P_{n+1}$. Un référentiel fixe OXYZ défini par exemple relativement au chemin de roulement est associé à l'installation pour repérer la position de chaque pont roulant. Le référentiel comprend une origine O située à la première extrémité du chemin de roulement des ponts matérialisée par les premiers moyens de fin de course FCl, et un axe X colinéaire à l'un des rails de roulement 1 et donc parallèle au déplacement de translation.

Afin de fixer les idées, le chemin de roulement des ponts roulants a une longueur totale L de quelques centaines de mètres entre les premier et second moyens de fin de course FC1 et FC2, et les ponts ont une portée de quelques dizaines de mètres suivant l'axe Y parallèle à leur poutre, correspondant à l'entraxe des rails de roulement 1.

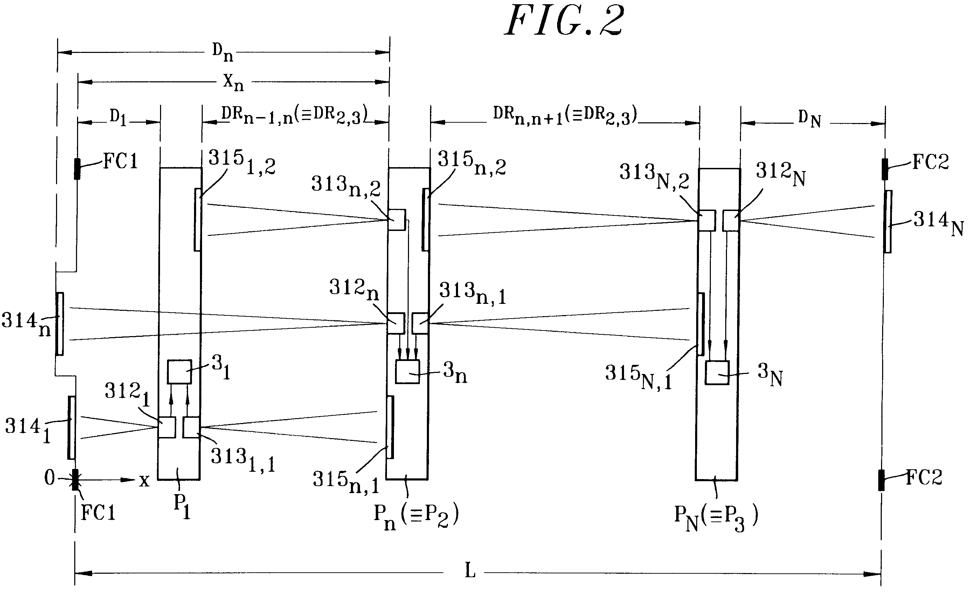

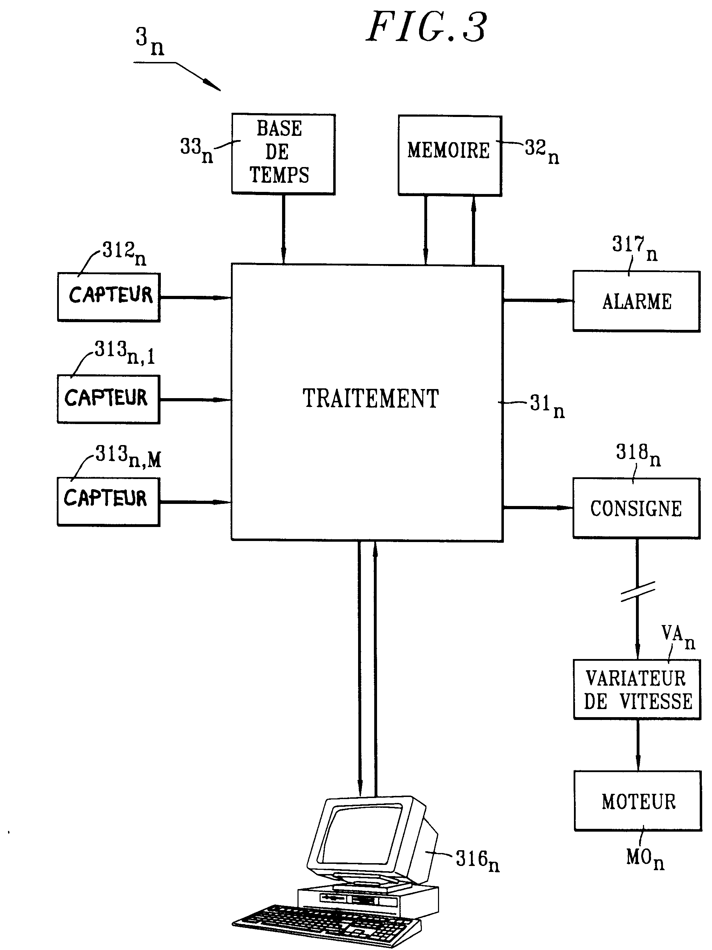

En référence aux figures 2 et 3, un **dispositif d'anticollision** $3_n$ est associé au pont roulant $P_n$. De préférence, chaque pont $P_1$ à $P_N$ est équipé d'un dispositif $3_1$ à $3_N$, ou selon une variante plus simple de l'invention, seulement au moins l'un des ponts $P_1$ à $P_N$ est ainsi équipé. Dans tous les cas, le dispositif d'anticollision $3_n$ du pont roulant $P_n$ est autonome et indépendant de dispositifs d'anticollision équipant d'autres ponts roulants de l'installation aussi bien dans sa structure que dans sa mise en oeuvre, ce qui améliore la sécurité de l'installation. En effet, en cas de défaillance de l'un des dispositifs d'anticollision, le fonctionnement global de l'installation peut être dégradé sans propagation de la défaillance et donc blocage total de l'installation.

Le dispositif d'anticollision $3_n$ comprend une unité de traitement $31_n$ et une mémoire $32_n$ incluses dans un boîtier fixé au pont roulant $P_n$. Dans la mémoire $32_n$ sont mémorisés un algorithme d'anticollision qui est décrit dans la suite ainsi que des paramètres de configuration de l'algorithme qui sont détaillés au fur et à mesure de la description de l'algorithme. L'unité de traitement $31_n$ comprend des ports d'entrée/sortie analogiques et numériques sur lesquels sont connectables des capteurs de distance et/ou de vitesse $312_n$ et $313_{n,1}$ à $313_{n,M}$ du pont roulant $3_n$, des moyens $316_n$ d'interface avec le pontier et des moyens d'action $317_n$ - $318_n$ Une base de temps $33_n$ synchronise les entrées/sorties et les traitements qui sont détaillés dans la suite. En variante, un capteur de ballant est en outre connecté à l'unité de traitement $31_n$. Le capteur de ballant est fixé à l'extrémité inférieure du palan $22_n$ pour mesurer le ballant de la charge $CH_n$ lors du déplacement.

Les capteurs de distance associés au pont roulant $P_n$ sont de type à liaison sans contact et de préférence des distancemètres à faisceau laser $312_n$ et $313_{n,1}$ à $313_{n,M}$, avec M entier positif au plus égal à 2. Un réflecteur $314_n$ ou $315_{n+1,m}$ est monté en regard de chaque distancemètre $312_n$ ou $313_{n,m}$ Le distancemètre $312_n$ ou $313_{n,m}$ émet un faisceau de lumière infrarouge en mode impulsionnel en direction du réflecteur en regard $314_n$ ou $315_{n\pm1,m}$ Le réflecteur renvoie la lumière émise vers le distancemètre qui mesure le temps séparant l'émission et la réception d'une impulsion du faisceau et en déduit la distance entre le distancemètre et le réflecteur. Le faisceau émis est légèrement divergent afin que la mesure soit réalisable même si le pont roulant n'a pas un déplacement de translation parfaitement rectiligne mais légèrement "en crabe" en raison par exemple de phénomène de glissement de galets sur les rails de roulement. Le distancemètre à laser offre une précision de mesure de l'ordre de 5 millimètres et une portée allant jusqu'à environ 10 kilomètres. En outre, son temps de réponse permet d'effectuer entre environ 10 et 30 mesures de distance par seconde.

Le premier distancemètre $312_n$ est associé à un réflecteur $314_n$ monté sur un élément immobile de l'installation, tel que paroi de halle si l'installation de pont roulant est dans une halle. Le premier réflecteur $314_n$ est par exemple aligné dans un plan vertical contenant les moyens de fin de course FC1 et l'origine O du référentiel OXYZ de sorte que le premier distancemètre mesure l'abscisse du pont roulant $P_n$ dans le référentiel fixe.

Les seconds distancemètres $313_{n,1}$ et/ou $313_{n,2}$ sont respectivement associés à des réflecteurs $315_{n+1,1}$ et/ou $315_{n-1,2}$ montés sur le ou les pont(s) roulant(s) adjacent(s) $P_{n+1}$ et/ou $P_{n-1}$ et mesurent ainsi des distances relatives du pont $P_n$ par rapport au(x) pont(s) adjacent(s). Chaque pont roulant d'extrémité $P_1$ ou $P_N$ a un unique second distancemètre $313_{1,1}$ ou $313_{N,2}$ associé à un réflecteur $315_{2,1}$ ou $315_{N-1,2}$ monté sur le pont roulant adjacent $P_2$ ou $P_N$, c'est-à-dire à un réflecteur $315_{n,1}$ ou $315_{n,2}$ du pont $P_n$ selon la réalisation illustrée pour laquelle $P_n = P_2$ et $P_N = P_3$. Dans le cas où N est au moins égal à 3, chaque pont roulant intermédiaire $P_n$, avec $1 < n < N$, a deux seconds distancemètres $313_{n,1}$ et $313_{n,2}$ associés à deux réflecteurs $315_{n+1,1}$ et $315_{n-1,2}$ montés sur les deux ponts roulants $P_{n+1}$ et $P_{n-1}$ adjacents encadrant le pont intermédiaire $P_n$.

De préférence, les systèmes à distancemètre et réflecteur sont décalés spatialement les uns des autres, suivant la direction Y parallèle aux axes longitudinaux des ponts et également en hauteur au-dessus des ponts, de sorte qu'il n'y ait pas d'interférence entre les faisceaux des différents distancemètres.

En variante, le premier distancemètre $312_n$ est remplacé par un moyen de mesure de distance moins coûteuse, tel que générateur d'impulsion, ou par un moyen de mesure de vitesse, tels que génératrice tachymétrique. Ces moyens sont fréquemment disponibles sur les ponts roulants existants, ce qui réduit d'autant le coût d'installation du dispositif d'anticollision sur les ponts existants. Les capteurs de distance utilisés sur un pont roulant donné ne sont pas nécessairement identiques entre eux, de même que les capteurs utilisés sur les différents ponts roulants de l'installation.

Les moyens $316_n$ d'interface avec le pontier sont un écran et un clavier alphanumérique, par exemple ceux d'un ordinateur muni en outre d'une mémoire pour mémoriser les évènements relatifs au pont roulant $P_n$. Les moyens d'action sont des moyens d'alarme $317_n$ visuelle ou sonore, et/ou des moyens $318_n$, tels qu'un convertisseur numérique-analogique pour transmettre une consigne de vitesse à des variateurs de vitesse $VA_n$ commandant des moteurs d'entraînement $MO_n$ inclus dans les sommiers du pont roulant $P_n$ pour déplacer le pont. En variante, les moyens d'action $317_n$ - $318_n$ sont des moyens pour afficher des messages destinés au pontier, par exemple sur l'écran de l'ordinateur $316_n$, afin que le pontier actionne lui-même des commandes de moteur agissant notamment sur les variateurs de vitesse.

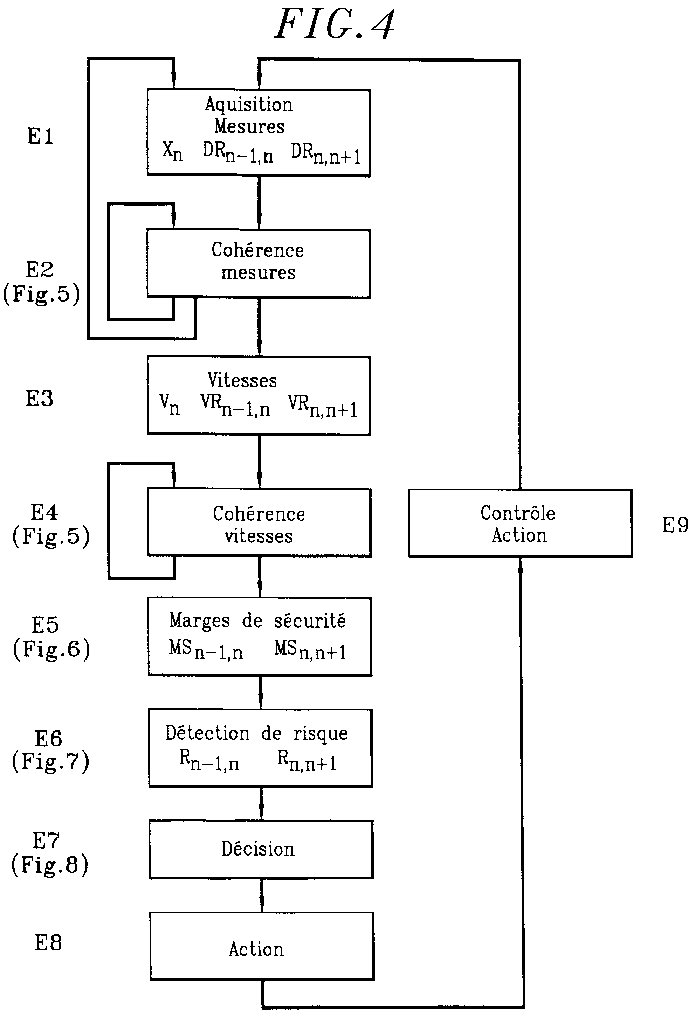

En référence à la figure 4, **l'algorithme d'anticollision** implanté en mémoire $32_n$ du dispositif d'anticollision $3_n$ du pont roulant $P_n$ comprend neuf étapes E1 à E9.

**L'étape E1** est **l'acquisition de mesures** par les capteurs de distance. Lorsque ceux-ci sont des distancemètres à laser tels que précédemment décrits, les capteurs de distance effectuent environ 15 mesures par seconde. Comme montré à la figure 2, pour un pont roulant intermédiaire $P_n$, les mesures acquises sont la distance $D_n$ du pont roulant $P_n$ par rapport au réflecteur fixe $314_n$ et les distances relatives $DR_{n-1,n}$ et $DR_{n,n+1}$ du pont roulant $P_n$ par rapport aux ponts roulants adjacents $P_{n-1}$ et $P_{n+1}$. Dans le cas d'un pont roulant d'extrémité $P_1$ ou $P_N$, les mesures acquises sont la distance $D_1$ ou $D_N$ et la position ou distance relative $DR_{1,2}$ ou $DR_{N-1,N}$ du pont roulant d'extrémité par rapport au pont roulant adjacent $P_2$ ou $P_{N-1}$. Si le réflecteur $314_n$ n'a pas une abscisse nulle dans le référentiel fixe, comme illustré à la figure 2 pour le pont $P_n$, la distance $D_n$ est corrigée en une distance corrigée $X_n$ exprimée dans le référentiel fixe, par soustraction, ou bien addition, de la distance du réflecteur par rapport à l'origine O du référentiel. La position du pont roulant $P_n$ est alors repérée à un instant donné par la distance corrigée $X_n$ qui est l'abscisse du pont roulant $P_n$ dans le référentiel fixe.

Dans le cas où le premier distancemètre $312_n$ du pont roulant $P_n$ est remplacé par une génératrice tachymétrique, la mesure de la distance $D_n$ et en conséquence le calcul de la distance corrigée $X_n$ dans le référentiel fixe sont remplacés par la mesure de la vitesse $V_n$ du pont roulant $P_n$.

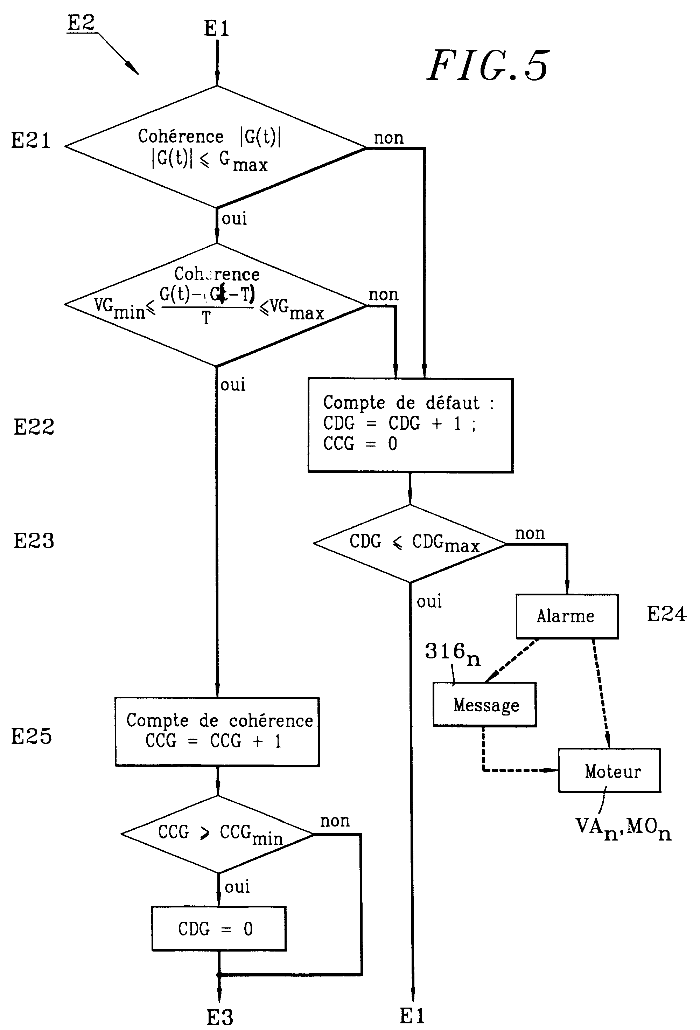

**L'étape E2** est un **contrôle de cohérence des valeurs mesurées** à l'étape E1. L'étape E2 est effectuée séquentiellement avec une période d'acquisition T de quelques millisecondes définie par la base de temps $33_n$ et successivement ou simultanément en parallèle pour les valeurs mesurées $X_n$ ou $V_n$, $DR_{n-1,n}$ et/ou $DR_{n,n+1}$. A la figure 5, une valeur $X_n$, $V_n$, $DR_{n-1,n}$ ou $DR_{n,n+1}$ est notée G, et la mesure de la valeur G à un instant t est notée G(t). La valeur mesurée G(t) à l'instant t subit deux tests de cohérence à l'étape E21. Le premier test de cohérence porte sur la valeur absolue de G(t) qui est comparée à une valeur prédéterminée maximale $G_{max}$. Le second test de cohérence porte sur la différence de G(t) et de la valeur G(t-T) acquise précédemment à l'instant (t-T), qui est comparée à des différences prédéterminées minimale et maximale $VG_{min}$ et $VG_{max}$.

Si les résultats des deux tests sont positifs, la valeur mesurée G(t) est considérée comme cohérente et l'algorithme passe à l'étape E25 au cours de laquelle un compte de cohérence CCG relatif aux mesures cohérentes G(t) consécutives est incrémenté de un. Le compte de cohérence CCG est comparé à un compte de cohérence minimal prédéterminé $CCG_{min}$ pour vérifier que les valeurs mesurées consécutives G(t) sont cohérentes en nombre significatif. Si c'est le cas, un compte de défaut CDG des valeurs mesurées G(t) est mis à zéro puis l'algorithme passe à l'étape E3 décrite dans la suite. Si le compte de cohérence CCG n'est pas supérieur au compte minimal $CCG_{min}$, alors le nombre consécutif de valeurs mesurées cohérentes est insuffisant, le compte de défaut n'est pas réinitialisé et l'algorithme passe à l'étape E3.

Si le résultat de l'un des tests à l'étape E21 est négatif, l'algorithme passe à l'étape E22 où le compte de défaut CDG est incrémenté de un et le compte de cohérence CCG est mis à zéro. A l'étape E23, le compte de défaut CDG est comparé à un compte de défaut maximal $CDG_{max}$. Si le compte CDG est inférieur au compte maximal $CDG_{max}$, alors l'algorithme passe à l'étape de mesure E1 pour acquérir de nouvelles mesures. Si le compte de défaut CDG excède le compte maximal $CDG_{max}$, alors les mesures sont incohérentes et l'algorithme passe à l'étape E24 pour afficher un message d'alerte du type "mesure de vitesse anormale" à l'écran de visualisation de l'ordina-

teur $316_n$ pour le pontier qui commande en conséquence les variateurs de vitesse $VA_n$ du pont et les moteurs $MO_n$ du pont. Selon une autre variante, à l'étape E24, une alarme visuelle et/ou sonore est actionnée, ou encore une consigne de freinage est transmise aux moteurs $MO_n$ du pont.

En référence à nouveau à la figure 4, **l'étape E3** détermine les **dérivées** des distances $X_n$ et $DR_{n-1,n}$ et/ou $DR_{n,n+1}$ par rapport au temps. L'étape E3 a pour résultat des **"vitesses"** $V_n$ et $VR_{n-1,n}$ et/ou $VR_{n,n+1}$, chaque vitesse ayant un signe positif ou négatif selon que la distance respectivement dérivée est augmentée ou diminuée. Ainsi, pour le pont $P_1$ sont calculées les dérivées des distances $X_1$ et $DR_{1,2}$ ; pour le pont $P_N$ sont calculées les dérivées des distances $X_N$ et $DR_{N-1,N}$ ; et pour tous les ponts $P_n$, avec $1 < n < N$, sont calculées les dérivées des distances $X_n$, $_DR_{n-1,n}$ et $DR_{n,n+1}$. Les dérivées sont calculées en fonction de deux mesures consécutives espacées de la période d'échantillonnage T; en variante un calcul de pente sur un intervalle de temps prédéterminé est effectué. Dans le cas où le premier capteur de distance est remplacé par une génératrice tachymétrique, à l'étape E3 la vitesse $V_n$ n'est pas calculée puisque la vitesse $V_n$ est mesurée à l'étape E1.

**L'étape E4** est un **contrôle de cohérence des vitesses** calculées $V_n$, $VR_{n-1,n}$, et/ou $VR_{n,n+1}$. Le contrôle de cohérence est effectué pour chaque valeur calculée, de manière similaire à celle décrite en référence à la figure 5.

A **l'étape E5** sont déterminées deux **marges de sécurité** $MS_{n-1,n}$ et $MS_{n,n+1}$ pour le pont roulant $P_n$. Les deux marges de sécurité $MS_{n-1,n}$ et $MS_{n,n+1}$ sont des longueurs calculées depuis le pont roulant $P_n$ respectivement en sens opposés. Pour le pont roulant $P_1$ la marge $MS_{0,1}$ est comprise entre la première extrémité du chemin de roulement et le pont roulant $P_1$ et la marge de sécurité $MS_{1,2}$ est comprise entre les ponts roulants $P_1$ et $P_2$. Pour le pont roulant $P_N$, la marge de sécurité $MS_{N-1,N}$ est comprise entre les ponts roulants $P_{N-1}$ et $P_N$ et la marge de sécurité $MS_{N,N+1}$ est comprise entre le pont roulant $P_N$ et la seconde extrémité du chemin de roulement. Enfin dans le cas où N est au moins égal à 3, pour un pont roulant intermédiaire $P_n$, avec $1<n<N$, les marges de sécurité $MS_{n-1,n}$ et $MS_{n,n+1}$ sont comprises entre les ponts roulants $P_n$ et $P_{n-1}$ et les ponts roulants $P_n$ et $P_{n+1}$, respectivement.

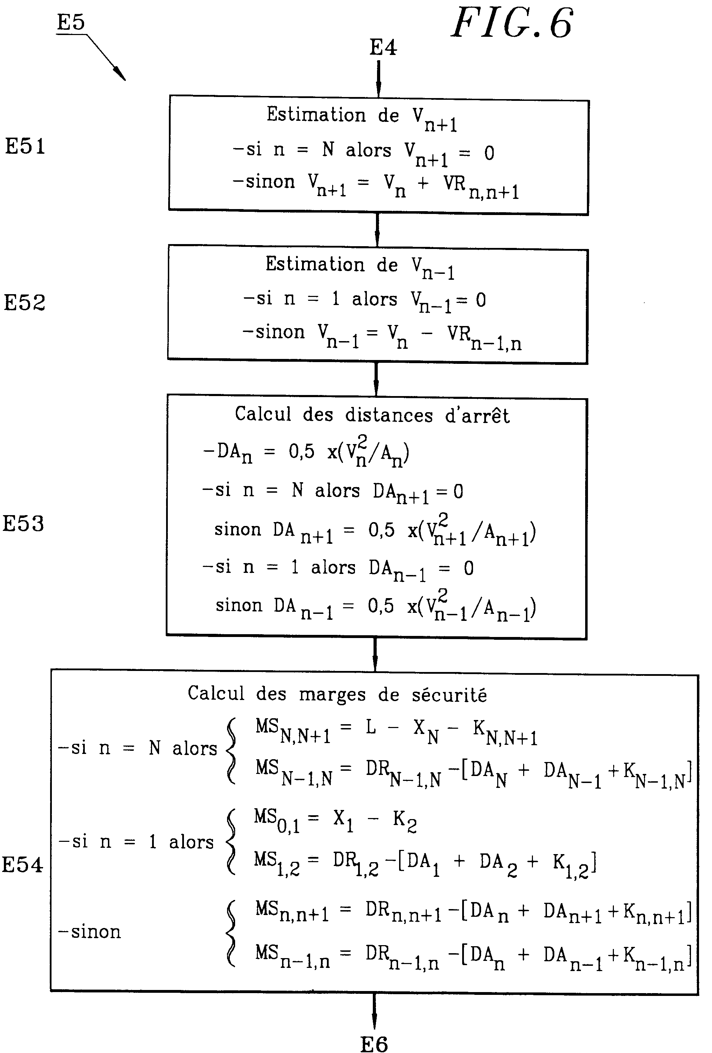

En référence à la **figure 6**, l'étape E5 comprend quatre sous-étapes E51 à E54. La sous-étape E51 est l'estimation de la vitesse $V_{n+1}$ du pont $P_{n+1}$ en fonction des vitesses $V_n$ et $VR_{n,n+1}$ précédemment déterminées à l'étape E3. Pour $n = N$, la vitesse $V_{N+1}$ est nulle puisque le pont $P_{N+1}$ est inexistant. Dans tous les autres cas, avec $1 \leq n < N$, la vitesse $V_{n+1}$ est égale à $V_n + VR_{n,n+1}$.

D'une manière analogue, à la sous-étape E52, la vitesse $V_{n-1}$ du pont $P_{n-1}$ est estimée en fonction des vitesses $V_n$ et $VR_{n-1,n}$ précédemment déterminées à l'étape E3. Pour $n = 1$, la vitesse $V_0$ est nulle puisque le pont $P_0$ est inexistant. Dans les autres cas avec $1 < n \leq N$, la vitesse $V_{n-1}$ est égale à $V_n -VR_{n-1,n}$.

La sous-étape E53 est le calcul de distances d'arrêt $DA_n$, $DA_{n+1}$ et/ou $DA_{n-1}$ des ponts roulants $P_n$, $P_{n+1}$ et/ou $P_{n-1}$ respectivement en fonction de la vitesse $V_n$ calculée à l'étape E3 et des vitesses $V_{n+1}$ et/ou $V_{n-1}$ estimées aux sous-étapes E51 et/ou E52. Les distances d'arrêt $DA_n$, $DA_{n+1}$ et/ou $DA_{n-1}$ sont les distances parcourues par les ponts roulants $P_n$, $P_{n+1}$ et/ou $P_{n-1}$ entre l'instant t auquel leurs vitesses sont $V_n$, $V_{n+1}$ et/ou $V_{n-1}$ et l'instant auquel leurs vitesses sont nulles. Selon une première variante, les décélérations des ponts roulants $P_n$, $P_{n+1}$, et/ou $P_{n-1}$ sont constantes et ont les valeurs respectives $A_n$ $A_{n+1}$ et/ou $A_{n-1}$. Les vitesses sont des fonctions linéaires du temps et s'annulent aux instants respectifs $t_n = V_n/A_n$, $t_{n+1} = V_{n+1}/A_{n+1}$ et $t_{n-1} = V_{n-1}/A_{n-1}$. A ces instants, les distances parcourues sont $DA_n = 0,5 \times (V_n^2/A_n)$, $DA_{n+1} = 0,5 \times (V_{n+1}^2/A_{n+1})$ et $DA_{n-1} = 0,5 \times (V_{n-1}^2/A_{n-1})$.

Selon une seconde variante, la décélération de chaque pont roulant dépend de la vitesse de pont suivant une loi établie expérimentalement. La décélération est par exemple constante par plage de vitesse ou encore varie linéairement en fonction de la vitesse.

Comme les estimations des vitesses $V_{n+1}$ et $V_{n-1}$ aux sous-étapes E51 et E52, le calcul des distances d'arrêt tient compte des cas particuliers dans lesquels $n = 1$ et $n = N$. Ainsi si $n = 1$, la distance d'arrêt $DA_{n-1}$ est nulle de même, si $n = N$, la distance d'arrêt $DA_{n+1}$ est nulle.

La sous-étape E54 détermine les marges de sécurité $MS_{n,n+1}$ et $MS_{n-1,n}$ en fonction des distances relatives $DR_{n,n+1}$ et $DR_{n-1,n}$ mesurées à l'étape E1 et des distances d'arrêt précédemment calculées à la sous-étape E53. Un coefficient d'erreur respectif $K_{n,n+1}$, $K_{n-1,n}$, prend en compte les temps de calculs entre mesure (étape E1) et action (étape E7), les incertitudes sur les mesures, et un coefficient de sécurité.

Les coefficients $K_{n,n+1}$ et $K_{n-1,n}$ sont déterminés en fonction d'une connaissance expérimentale du comportement des ponts roulants $P_n$ et $P_{n+1}$, et $P_n$ et $P_{n-1}$, respectivement.

Le calcul des marges de sécurité diffère selon que le pont roulant $P_n$ est un pont d'extrémité ou un pont intermédiaire.

Si $1 < n < N$, les marges de sécurité sont :
$$MS_{n,n+1} = DR_{n,n+1} - [DA_n + DA_{n+1} + K_{n,n+1}]$$
$$MS_{n-1,n} = DR_{n-1,n} - [DA_n + DA_{n-1} + K_{n-1,n}].$$
Si $n = N$, alors $MS_{N-1,N}$ est calculée suivant la formule correspondante précédente et
$$MS_{N,N+1} = L - X_N - K_{N,N+1},$$
où L est la longueur totale entre les moyens de fin de course.

Si $n = 1$, alors $MS_{1,2}$ est calculée suivant la formule correspondante précédente et
$$MS_{0,1} = X_1 - K_{0,1}.$$

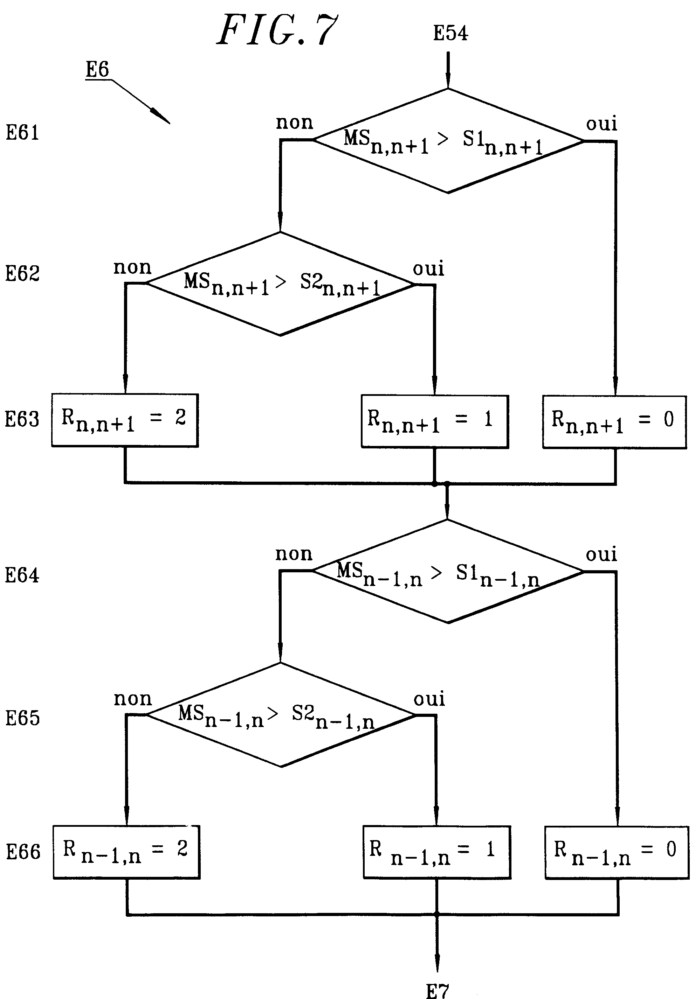

En référence à nouveau à la figure 4, **l'étape de détection de risque E6** consiste en des comparaisons des marges de sécurité calculées à l'étape E5 avec des seuils prédéterminés qui déterminent des zones à chacune desquelles est affecté un risque prédéterminé. Dans la réalisation illustrée à la **figure 7**, l'étape E6 comprend six sous-étapes E61 à E66 au cours desquelles chacune des marges de sécurité $MS_{n,n+1}$ et $MS_{n-1,n}$ est comparée à deux seuils respectifs qui définissent trois zones vers un côté respectif du pont roulant $P_n$.

A la sous-étape E61, la marge de sécurité $MS_{n,n+1}$ est comparée à un premier seuil $S1_{n,n+1}$. Le seuil $S1_{n,n+1}$ est une distance de pré-alarme qui définit deux zones devant le pont roulant $P_n$, entre les ponts roulants $P_n$ et $P_{n+1}$. Si la marge de sécurité $MS_{n,n+1}$ est supérieure au seuil $S1_{n,n+1}$, alors il n'y a pas de risque de collision du pont $P_n$ avec le pont suivant $P_{n+1}$ et, à la sous-étape E63, un facteur de risque $R_{n,n+1}$ qui est une variable logique à trois états est initialisé à zéro. Un risque de collision entre les ponts $P_n$ et $P_{n+1}$ est prévisible si la marge de sécurité $MS_{n,n+1}$ est inférieure au seuil $S1_{n,n+1}$ et, à la sous-étape E62, la marge de sécurité $MS_{n,n+1}$ est comparée à un second seuil $S2_{n,n+1}$ inférieur au premier seuil $S1_{n,n+1}$. Si la marge de sécurité $MS_{n,n+1}$ est supérieure au second seuil $S2_{n,n+1}$, alors le pont roulant $P_n$ est dans une zone à risque et le facteur de risque $R_{n,n+1}$ est initialisé à 1 à la sous-étape E63.

Si la marge de sécurité $MS_{n,n+1}$ est inférieure au second seuil $S2_{n,n+1}$, alors le pont roulant $P_n$ est dans une zone de collision à haut risque et le facteur de risque $R_{n,n+1}$ vaut alors 2 à la sous-étape E63.

Aux sous-étapes E64 à E66, la marge de sécurité $MS_{n-1,n}$ est comparée à deux seuils prédéterminés $S1_{n-1,n}$ et $S2_{n-1,n}$ de manière analogue aux sous-étapes E61 à E63. Le résultat de la sous-étape E66 est un facteur de risque qui est une variable logique à trois états $R_{n-1,n}$ valant 0,1 ou 2 suivant le risque détecté, c'est-à-dire selon que la marge de sécurité $MS_{n-1,n}$ est plus grande que $S1_{n-1,n}$ est comprise entre $S2_{n-1,n}$ et $S1_{n-1,n}$, ou est plus petite que $S_{2n-1,n}$.

Le nombre de seuils et en conséquence de zones et donc d'états logiques des facteurs de risque $R_{n,n+1}$ et $R_{n-1,n}$ sont choisis en fonction d'une connaissance expérimentale du pont roulant $P_n$ et ne sont pas nécessairement égaux de part et d'autre du pont $P_n$. En pratique, le nombre de zones sur chacun des côtés du pont $P_n$ est choisi entre un et cinq.

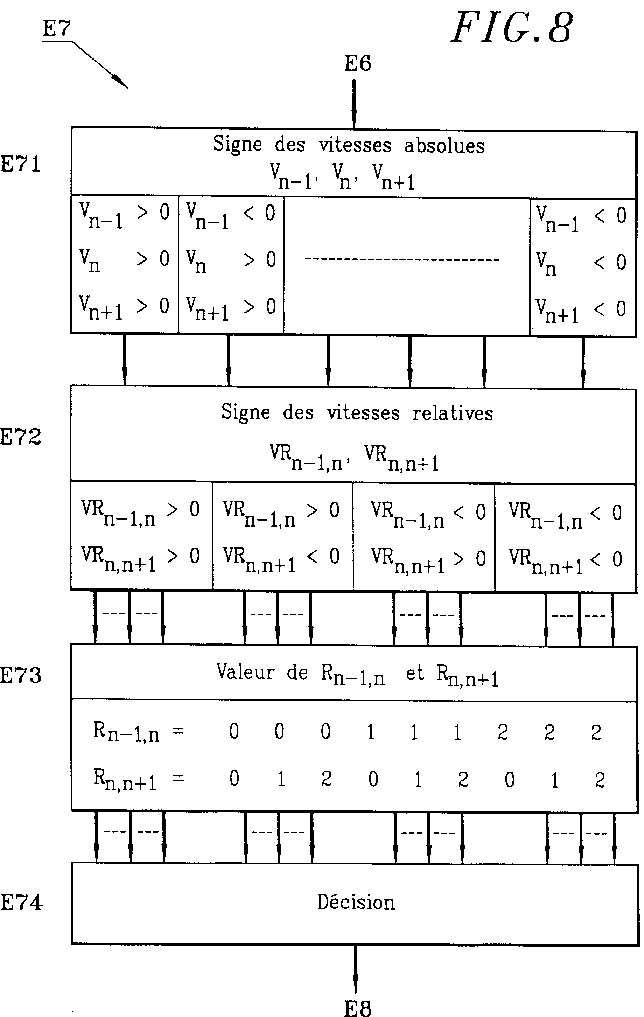

**L'étape E7** est la **décision d'une action** à entreprendre sur la conduite du pont roulant $P_n$, en fonction des vitesses absolues $V_{n-1}$, $V_n$ et $V_{n+1}$, des vitesses relatives $VR_{n-1,n}$ et $VR_{n,n+1}$ et des facteurs de risque $R_{n,n+1}$ et $R_{n-1,n}$. Comme montré à la **figure 8**, l'étape E7 comprend quatre sous-étapes E71 à E74.

La sous-étape E71 sélectionne la combinaison des sens de déplacement suivant laquelle se trouve le pont roulant $P_n$ par rapport aux ponts adjacents et, le cas échéant, par rapport à l'extrémité adjacente de chemin de roulement, parmi $2^3 = 8$ premières combinaisons possibles en fonction des signes des trois vitesses absolues $V_{n-1}$, $V_n$ et $V_{n+1}$. Le signe de chaque vitesse $V_n$, $V_{n-1}$ ou $V_{n+1}$ indique le sens du déplacement du pont roulant $P_n$, $P_{n-1}$ et/ou $P_{n+1}$.

La sous-étape E72 détermine la combinaison en rapprochement/éloignement dans laquelle le pont roulant $P_n$ se trouve relativement aux ponts roulants adjacents/extrémité de chemin de roulement en fonction des signes des vitesses relatives $VR_{n-1,n}$ et $VR_{n,n+1}$. Pour chacune des premières combinaisons de la sous-étape E71, il existe $2^2 = 4$ secondes combinaisons possibles en fonction des signes des vitesses relatives, ce qui produit un total de $2^3 \times 2^2 = 32$ sous-combinaisons.

La sous-étape E73 décompose les 32 sous-combinaisons précédentes en $3^2 \times 32 = 288$ combinaisons élémentaires en fonction des valeurs des facteurs de risque $R_{n,n+1}$ et $R_{n-1,n}$, lorsque ceux-ci sont des variables logiques à 3 états. Une action prédéterminée est associée pour chacune des combinaisons élémentaires.

En fonction de l'une des combinaisons élémentaires dans laquelle se trouve le pont $P_n$, l'étape E74 choisit la décision d'action associée. Ainsi à titre d'exemple, si $V_{n-1} > 0$, $V_n > 0$, $V_{n+1} > 0$ et $R_{n-1,n} = 0$, $R_{n,n+1} = 2$, alors la décision est d'arrêter le pont roulant $P_n$.

Les décisions sont dirigées vers le variateur de vitesse $VA_n$, soit automatiquement à travers les moyens pour transmettre $318_n$, soit semi-automatiquement à travers l'interface pontier-pont constitué par l'ordinateur $316_n$. Les décisions possibles sont notamment :

- aucune action,
- ralentir le pont roulant,
- arrêter le pont roulant, et
- accélérer le pont roulant.

Les décisions d'accélérer et de ralentir sont décomposables en accélérer, respectivement ralentir, le pont roulant à $F \times V_n$, où F vaut par exemple 1,1, 1,2 ou 0,9, 0,8, 0,7, et la valeur de F est prédéterminée pour chaque combinaison élémentaire qui implique une action d'accélérer ou de ralentir.

**L'étape E8** réalise **l'action** décidée à l'étape E7. L'action est par exemple la transmission d'une consigne de vitesse aux variateurs de vitesse $VA_n$ des moteurs d'entraînement $MO_n$ du pont roulant $P_n$. En variante, l'action est l'affichage sur l'écran alphanumérique de l'ordinateur $316_n$ d'un message résumant la décision prise à l'étape E7. Ce message est alors lu par le pontier qui réalise l'action décidée et affichée. Selon une autre variante, des alarmes sonores et/ou visuelles sont associées aux combinaisons élémentaires jugées a priori les plus dangereuses, afin qu'une alarme se déclenche lorsque le pont roulant se trouve dans l'une de ces combinaisons élémentaires dangereuses. Selon la variante où un capteur de ballant est connecté à l'unité de traitement $31_n$, l'information de ballant corrige l'action, par exemple en limitant une accélération lorsque la charge a un ballant important.

**L'étape E9** contrôle l'action réalisée à l'étape E8. Lorsqu'une action est entreprise à l'étape E8, elle doit avoir un effet sur le déplacement du pont roulant $P_n$ à l'expiration d'une durée prédéterminée, typiquement de quelques secondes. Par exemple, l'action de freiner doit faire diminuer la vitesse, et la variation de la vitesse en fonction du temps qui dépend notamment de l'inertie du pont, est connue expérimentalement. Le contrôle est effectué sur la vitesse $V_n$ du pont roulant $P_n$ et sur les vitesses relatives $VR_{n-1,n}$ et $VR_{n,n+1}$ qui sont chacune comparées à un gabarit objectif prédéterminé respectif. Le contrôle d'une action donnée est préprogrammé en fonction de l'une des combinaisons élémentaires qui a induit l'action.

Après l'étape E9, l'algorithme est rebouclé sur l'étape E1 de mesure.

Le dispositif et le procédé d'anticollision selon l'invention offrent une grande souplesse d'utilisation, notamment par leur adaptation au pont roulant auquel ils sont associés, par leur autonomie et leur indépendance vis-à-vis d'autres dispositifs et procédés équipant éventuellement d'autres ponts roulants de l'installation, et par les paramétrages du jeu de combinaisons élémentaires.

L'invention est décrite ci-dessus en référence à des ponts roulants. Cependant, le procédé et le dispositif selon l'invention s'appliquent à tout type de mobiles se déplaçant sur un chemin de déplacement commun aux mobiles. Ces mobiles sont par exemple des grues portuaires ou des chariots ou tracteurs électriques sans conducteur guidés optiquement ou par induction, ou des transtockeurs, dits également translateurs ou transélévateurs, à déplacement guidé horizontal et/ou vertical dans un magasin.

**Revendications**

**1** - Procédé d'anticollision entre des premier et second mobiles ($P_n$ ; $P_{n+1}$) déplaçables sur un chemin de roulement commun (1), ledit procédé étant mis en oeuvre dans ledit premier mobile et comprenant une mesure (E1) d'une première distance ($X_n$) entre le premier mobile ($P_n$) et une origine (O) dans un référentiel fixe prédéterminé (OXYZ) et d'une seconde distance ($DR_{n,n+1}$) entre le premier mobile ($P_n$) et le second mobile ($P_{n+1}$),

caractérisé en ce qu'il comprend les étapes de :
- déterminer (E3) une première vitesse ($V_n$) du premier mobile ($P_n$) dans ledit référentiel fixe et une seconde vitesse ($VR_{n,n+1}$) du premier mobile ($P_n$) relativement au second mobile ($P_{n+1}$)

en fonction des première et seconde distances afin d'en déduire (E51) une troisième vitesse ($V_{n+1}$) du second mobile dans ledit référentiel fixe (OXYZ),
- estimer (E5) une première marge de sécurité ($MS_{n,n+1}$) entre les premier et second mobiles ($P_n$, $P_{n+1}$) en fonction de la seconde distance ($DR_{n,n+1}$) et des première et troisième vitesses ($V_n$, $V_{n+1}$),
- comparer (E6) ladite première marge de sécurité ($MS_{n,n+1}$) à au moins un premier seuil prédéterminé ($S1_{n,n+1}$, $S2_{nn+1}$) afin de produire un premier facteur de risque de collision ($R_{n,n+1}$), et
- décider (E7) une action (E8) sur des moyens moteurs ($VA_n$, $MO_n$) du premier mobile ($P_n$) en fonction du signe d'au moins l'une des première, seconde et troisième vitesses ($V_n$, $VR_{n,n+1}$, $V_{n+1}$) et en fonction du premier facteur de risque de collision ($R_{n,n+1}$) afin d'empêcher une collision entre les premier et second mobiles ($P_n$, $P_{n+1}$).

**2** - Procédé d'anticollision conforme à la revendication 1, caractérisé en ce que l'étape d'estimer (E5) comprend les sous-étapes de :
- calculer (E53) une première distance d'arrêt ($DA_n$, $DA_{n,n+1}$) du premier mobile en fonction de la première vitesse ($V_n$) et d'une décélération prédéterminée du premier mobile ($A_n$), et une seconde distance d'arrêt ($DA_{n+1}$) du second mobile en fonction de la troisième vitesse ($V_{n+1}$) et d'une décélération prédéterminée du second mobile ($A_{n+1}$), et
- calculer (E54) ladite première marge de sécurité ($MS_{n,n+1}$) en fonction de la seconde distance ($DR_{n,n+1}$) et des première et seconde distances d'arrêt ($DA_n$, $DA_{n,n+1}$).

**3** - Procédé d'anticollision conforme à la revendication 1 ou 2, comprenant une étape de cohérence (E2 ; E4) relative à une variable ($G(t)$) égale à l'une des première et seconde distances ($X_n$, $DR_{n,n+1}$) et première et seconde vitesses ($V_n$, $VR_{n,n+1}$), comportant les sous-étapes de :
- effectuer au moins l'une de première et seconde comparaisons, la première comparaison (E21) consistant à comparer la variable en valeur absolue ($|G(t)|$) à une valeur maximale ($G_{max}$), et la seconde comparaison (E21) consistant à comparer une différence entre la variable ($G(t)$) et une valeur de la variable à un instant précédent ($G(t-T)$) avec des différences minimale et maximale ($T.VG_{min}$, $T.VG_{max}$),
- lorsque la variable en valeur absolue ($|G(t)|$) est inférieure à la valeur maximale ($G_{max}$) et ladite différence ($G(t) - G(t-T)$) est comprise entre les différences minimale et maximale, incrémenter (E25) un compte de cohérence (CCG) de un et considérer ladite variable comme cohérente dans les étapes suivantes du procédé, un compte de défaut (CDG) étant mis à zéro lorsque le compte de cohérence est supérieur à un compte de cohérence minimal ($CCG_{min}$),

- lorsque la variable en valeur absolue ($|G(t)|$) est supérieure à la valeur maximale ($G_{max}$) ou ladite différence ($G(t) - G(t-T)$) est inférieure à la différence minimale ($T.VG_{min}$) ou supérieure à la différence maximale ($T.VG_{max}$), incrémenter (E22) ledit compte de défaut (CDG) de un et mettre à zéro le compte de cohérence (CCG), comparer (E23) le compte de défaut à un compte de défaut maximal ($CDG_{max}$) afin d'acquérir à nouveau ladite variable (E1) lorsque le compte de défaut est inférieur au compte de défaut maximal, et actionner (E24) les moyens moteurs ($VA_n$, $MO_n$) lorsque le compte de défaut est supérieur au compte de défaut maximal.

**4** - Procédé d'anticollision conforme à l'une quelconque des revendications 1 à 3, dans lequel le second mobile est remplacé par un obstacle (FC1, FC2) fixe à l'une des extrémités du chemin de roulement.

**5** - Procédé d'anticollision conforme à l'une quelconque des revendications 1 à 4, relatif en outre au premier mobile ($P_n$) et à un troisième mobile ($P_{n-1}$) qui est déplaçable sur le chemin de roulement (1) à l'opposé du second mobile ($P_{n+1}$) par rapport au premier mobile ($P_n$),

ledit procédé comprenant des étapes de mesurer une troisième distance ($DR_{n-1,n}$) entre les premier et troisième mobiles, de déterminer une quatrième vitesse ($VR_{n-1,n}$) du premier mobile ($P_n$) relativement au troisième mobile ($P_{n-1}$) en fonction des première et troisième distances afin d'en déduire une cinquième vitesse ($V_{n-1}$) du troisième mobile dans ledit référentiel fixe (OXYZ), d'estimer une seconde marge de sécurité ($MS_{n-1,n}$) entre les premier et troisième mobiles en fonction de la troisième distance ($DR_{n-1,n}$) et des première et cinquième vitesses ($V_n$, $V_{n-1}$), et de comparer ladite seconde marge de sécurité ($MS_{n,n-1}$) à au moins un second seuil prédéterminé ($S1_{n-1,n}$, $S2_{n-2,n}$) afin de produire un second facteur de risque de collision ($R_{n-1,n}$),

ladite étape de décider (E7) étant fonction en outre du signe de l'une au moins des quatrième et cinquième vitesses ($VR_{n-1,n}$, $V_{n-1}$) et du second facteur de risque de collision ($R_{n-1,n}$).

**6** - Dispositif d'anticollision ($3_n$) entre des premier et second mobiles ($P_n$, $P_{n+1}$) déplaçables sur un chemin de roulement commun (1), caractérisé en ce qu'il comprend relativement au premier mobile ($P_n$) :

- un premier moyen de mesure de distance ($312_n$) pour mesurer une première distance ($X_n$) entre le premier mobile ($P_n$) et une origine (O) dans un référentiel fixe prédéterminé (OXYZ),
- un second moyen de mesure de distance

($313_{n,1}$) pour mesurer au moins une seconde distance ($DR_{n,n+1}$) entre les premier et second mobiles ($P_n$, $P_{n+1}$), et

- un moyen central de traitement ($31_n$) relié aux premier et second moyens de mesure de distance et à des moyens moteurs ($VA_n$, $MO_n$) du premier mobile ($P_n$) pour mettre en oeuvre le procédé conforme à l'une quelconque des revendications 1 à 5.

**7** - Dispositif d'anticollision conforme à la revendication 6, caractérisé en ce que le premier moyen de mesure de distance comprend un distancemètre à laser ($312_n$) fixé au premier mobile ($P_n$) et un réflecteur ($314_n$) fixe dans le référentiel (OXYZ), en regard du distancemètre.

**8** - Dispositif d'anticollision conforme à la revendication 7, caractérisé en ce que le second moyen de mesure de distance comprend un distancemètre à laser ($313_{n-1}$) fixé au premier mobile ($P_n$) et un réflecteur ($315_{n+1,1}$) fixé sur le second mobile ($P_{n+1}$) en regard du distancemètre.

# FIG. 1

## FIG.2

EP 0 664 271 A1

# *FIG.3*

$3_n$

| | | |
|---|---|---|
| $33_n$ → BASE DE TEMPS | MEMOIRE ← $32_n$ | |
| $312_n$ CAPTEUR → | | $317_n$ ALARME |
| $313_{n,1}$ CAPTEUR → | TRAITEMENT $31_n$ | |
| $313_{n,M}$ CAPTEUR → | | $318_n$ CONSIGNE |

$316_n$

$VA_n$

VARIATEUR DE VITESSE

MOTEUR

$MO_n$

# FIG.4

E1

Aquisition
Mesures
$X_n$   $DR_{n-1,n}$   $DR_{n,n+1}$

E2
(Fig.5)

Cohérence
mesures

E3

Vitesses
$V_n$   $VR_{n-1,n}$   $VR_{n,n+1}$

E4
(Fig.5)

Cohérence
vitesses

Contrôle
Action

E9

E5
(Fig.6)

Marges de sécurité
$MS_{n-1,n}$        $MS_{n,n+1}$

E6
(Fig.7)

Détection de risque
$R_{n-1,n}$        $R_{n,n+1}$

E7
(Fig.8)

Décision

E8

Action

13

*FIG.5*

E2

E1

E21 — Cohérence $|G(t)|$
$|G(t)| \leqslant G_{max}$ — non

oui

Cohérence
$VG_{min} \leqslant \dfrac{G(t) - G(t-T)}{T} \leqslant VG_{max}$ — non

oui

E22

Compte de défaut :
CDG = CDG + 1 ;
CCG = 0

E23

CDG $<$ CDG$_{max}$ — non

oui

Alarme — E24

$316_n$

Message

E25

Compte de cohérence
CCG = CCG + 1

CCG $>$ CCG$_{min}$ — non

oui

CDG = 0

Moteur

$VA_n, MO_n$

E3

E1

14

E5

E4

*FIG.6*

E51

Estimation de $V_{n+1}$

−si $n = N$ alors $V_{n+1} = 0$

−sinon $V_{n+1} = V_n + VR_{n,n+1}$

E52

Estimation de $V_{n-1}$

−si $n = 1$ alors $V_{n-1} = 0$

−sinon $V_{n-1} = V_n - VR_{n-1,n}$

E53

Calcul des distances d'arrêt

$-DA_n = 0,5 \ x(V_n^2/A_n)$

−si $n = N$ alors $DA_{n+1} = 0$

sinon $DA_{n+1} = 0,5 \ x(V_{n+1}^2/A_{n+1})$

−si $n = 1$ alors $DA_{n-1} = 0$

sinon $DA_{n-1} = 0,5 \ x(V_{n-1}^2/A_{n-1})$

E54

Calcul des marges de sécurité

−si $n = N$ alors $\begin{cases} MS_{N,N+1} = L - X_N - K_{N,N+1} \\ MS_{N-1,N} = DR_{N-1,N} -[DA_N + DA_{N-1} + K_{N-1,N}] \end{cases}$

−si $n = 1$ alors $\begin{cases} MS_{0,1} = X_1 - K_2 \\ MS_{1,2} = DR_{1,2} -[DA_1 + DA_2 + K_{1,2}] \end{cases}$

−sinon $\begin{cases} MS_{n,n+1} = DR_{n,n+1} -[DA_n + DA_{n+1} + K_{n,n+1}] \\ MS_{n-1,n} = DR_{n-1,n} -[DA_n + DA_{n-1} + K_{n-1,n}] \end{cases}$

E6

15

# *FIG.7*

E6

E54

E61　MS$_{n,n+1}$ > S1$_{n,n+1}$　　non　　oui

E62　MS$_{n,n+1}$ > S2$_{n,n+1}$　　non　　oui

E63　$R_{n,n+1} = 2$　　$R_{n,n+1} = 1$　　$R_{n,n+1} = 0$

E64　MS$_{n-1,n}$ > S1$_{n-1,n}$　　non　　oui

E65　MS$_{n-1,n}$ > S2$_{n-1,n}$　　non　　oui

E66　$R_{n-1,n} = 2$　　$R_{n-1,n} = 1$　　$R_{n-1,n} = 0$

E7

16

*FIG.8*

E7

E6

| E71 | Signe des vitesses absolues $V_{n-1}$, $V_n$, $V_{n+1}$ | | | | |
|---|---|---|---|---|---|
| | $V_{n-1} > 0$ $V_n > 0$ $V_{n+1} > 0$ | $V_{n-1} < 0$ $V_n > 0$ $V_{n+1} > 0$ | ------------------------- | | $V_{n-1} < 0$ $V_n < 0$ $V_{n+1} < 0$ |

| E72 | Signe des vitesses relatives $VR_{n-1,n}$, $VR_{n,n+1}$ | | | |
|---|---|---|---|---|
| | $VR_{n-1,n} > 0$ $VR_{n,n+1} > 0$ | $VR_{n-1,n} > 0$ $VR_{n,n+1} < 0$ | $VR_{n-1,n} < 0$ $VR_{n,n+1} > 0$ | $VR_{n-1,n} < 0$ $VR_{n,n+1} < 0$ |

| E73 | Valeur de $R_{n-1,n}$ et $R_{n,n+1}$ | | | | | | | | |
|---|---|---|---|---|---|---|---|---|---|
| $R_{n-1,n} =$ | 0 | 0 | 0 | 1 | 1 | 1 | 2 | 2 | 2 |
| $R_{n,n+1} =$ | 0 | 1 | 2 | 0 | 1 | 2 | 0 | 1 | 2 |

| E74 | Décision |
|---|---|

E8

Office européen
des brevets

**RAPPORT DE RECHERCHE EUROPEENNE**

Numéro de la demande

EP 95 40 0108

| **DOCUMENTS CONSIDERES COMME PERTINENTS** | | | |
|---|---|---|---|
| Catégorie | Citation du document avec indication, en cas de besoin, des parties pertinentes | Revendication concernée | CLASSEMENT DE LA DEMANDE (Int.Cl.6) |
| A | GB-A-2 205 463 (HITACHI)<br>* page 6, ligne 6 - ligne 14 *<br>* page 10, ligne 15 - page 11, ligne 17 *<br>* page 14, ligne 8 - page 15, ligne 12;<br>figure 1 *<br>--- | 1,6 | B66C15/04 |
| A | FR-A-2 680 897 (FREDERIC GIACALONE ET AL.)<br>* page 6, ligne 10 - page 7, ligne 28 *<br>--- | 1,6 | |
| A | US-A-4 030 088 (DAVID JACOB MCCULLOUGH)<br>* colonne 2, ligne 57 - colonne 3, ligne 5<br>*<br>* colonne 3, ligne 40 - ligne 56 *<br>--- | 1,4-6 | |
| A | FR-A-2 185 580 (POTAIN S.A. ET AL.)<br>* page 12, ligne 3 - ligne 20 *<br>--- | 1 | |
| A | DE-U-90 16 853 (ABUS WERNER BÜHNE KG)<br>* le document en entier *<br>----- | 7,8 | |
| | | | **DOMAINES TECHNIQUES RECHERCHES (Int.Cl.6)**<br><br>B66C |

Le présent rapport a été établi pour toutes les revendications

| Lieu de la recherche | Date d'achèvement de la recherche | Examinateur |
|---|---|---|
| LA HAYE | 16 Mai 1995 | WALDORFF, U |

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
......................................................................
& : membre de la même famille, document correspondant